# EUROPEAN PATENT APPLICATION

(11) **EP 3 364 132 A1**
(43) Date of publication of application: **22.08.2018**
(21) Application number: 17156515.3
(22) Date of filing: 16.02.2017
(51) Int. Cl.: F25D 1/00, A23L 3/36

(54) **A METHOD FOR COOLING DOWN FOOD HAVING A TEMPERATURE HIGHER THAN THE AMBIENT TEMPERATURE**

(71) Applicant: Hu Yi-Qiang, Fabbio, 2624 WW Delft (NL); Hu, Shao-Fei, 5258 KB Berlicum (NL)
(72) Inventor: Hu Yi-Qiang, Fabbio, 2624 WW Delft (NL); Hu, Shao-Fei, 5258 KB Berlicum (NL)
(74) Representative: van Heuvel, Margaretha

(57) **Abstract**

The invention relates to a method for cooling down food having a temperature higher than the ambient temperature, the method using:
• a first container (110) for storing the food to be cooled in an interior, the first container (110) comprising a first opening (111);
and
• a second container (120) comprising a second opening (125) and a fan assembly (126) arranged to generate an air stream through the second opening (125);
and the method comprises the steps of:
- generating the air stream by operating the fan assembly (126);
and
- stacking the first container (110) and the second container (120) to form a pile (200) in such a way that the first opening (111) and the second opening (125) are arranged to allow the air stream to flow in the interior of the first container (110).

## Description

### FIELD OF THE INVENTION

The invention is in the field of methods for cooling down food having a temperature higher than the ambient temperature by using a fan assembly.

### BACKGROUND OF THE INVENTION

In restaurants or professional kitchens food that is cooked and/or baked but that is to be consumed after at least a few hours, needs to be subjected to cooling in order to slow down bacterial activity that would affect said food. This is in general achieved by storing the food in a refrigerator. However, when the amount of food is big enough, said food cannot be subjected directly to the refrigerator if said food is still hot, since the temperature in the refrigerator itself or food already stored in it may be affected. The food has to be cooled down before being stored in the refrigerator.

Methods for cooling down food having a temperature higher than the ambient temperature are known. US4182049 discloses a method for conditioning products stacked in containers. The method uses ventilator units for generating an air current directed to a gap arranged between two containers. Thus, there is need of means to support the containers for arranging the gap between them.

Known methods for cooling down food have a problem in that they require a use of a large construction to arrange containers in such a way as to cool down the food.

The aim of the present invention is to alleviate said problem and to provide a more flexible method for cooling down food having a temperature higher than the ambient temperature.

### SUMMARY OF THE INVENTION

The invention relates to a method for cooling down food having a temperature higher than the ambient temperature, the method using:
- a first container for storing the food to be cooled in an interior, the first container comprising a first opening; and
- a second container comprising a second opening and a fan assembly arranged to generate an air stream through the second opening;
and the method comprises the steps of:
- generating the air stream by operating the fan assembly; and
- stacking the first container and the second container to form a pile in such a way that the first opening and the second opening are arranged to allow the air stream to flow in the interior of the first container along the food;
wherein the first container comprises a first air-opening to provide the air stream generated by the fan assembly to either being blown out from the interior of the first container or to be sucked into said interior of said first container through the first air-opening.

### DETAILED DESCRIPTION OF THE INVENTION

The aspect of the invention concerns a method according to claim 1. Thus the method for cooling down food according to the invention is more flexible since there is no need of means to arrange a gap between the first and second containers.

The method uses a first container for storing the food, the first container comprising a first opening, the first opening locating in a first section of the container. In general the first section is the top section or the bottom section of said first container. The first container may be for example a crate or a box. It is preferred that the first container is a crate having side walls and an open top section, at least one of the side walls being pierced to form a breathable separation surface.

The first container may be made of any material suitable for holding food. The material may be wood or a polymer such as polyethylene or polyurethane. In general, the first container used in the method is also used for storing the food within a refrigerator, a cooling cell or during transportation in further processes.

The method uses a second container to dispose a fan assembly for generating an air stream along the food to be cooled in the first container. The fan assembly comprises a fan and a motor to actuate said fan. Alternatively, the second container comprises a plurality of fan assemblies arranged next to each other to generate the air stream thereby reducing the space to accommodate the fan assembly, allowing the height of the second container to be reduced correspondingly. The second container may comprise a material that is suitable for holding food.

The second container comprises a second opening, the second opening locating in a second section of the second container. The fan assembly is preferably arranged in the interior of the second container, between the second section and a further section, the further section having a further opening to allow an air stream generated by the fan assembly to flow through said second container. The fan blades of the fan assembly may be arranged within a cage structure for security reasons.

In the method, the first container and the second container are placed such that the first section of the first container is adjacent to the second section of the second container. The term adjacent means that said first section and second section are in contact, or at least partially overlap each other, or are close enough to allow the air stream go inside the first container. This can be done for example by placing the first container on top of the second container, or, alternatively, by placing the second container on top of the first container. In general, the fan assembly is arranged within the second container such that said fan assembly faces the first opening of the first container.

The air stream generated by the fan assembly may then be blown out from the second opening of the second container to the interior of the first container via the first opening. Alternatively, the air stream can be sucked from the interior of the first container by said fan assembly. Thus, the air stream passes the food stored in the first container, making the cooling down process quicker. The pile can thus be stacked on a desk, or working platform or on the floor of the kitchen where the food has been cooked.

In the method according to the invention, the first container comprises a first air-opening to provide the air stream generated by the fan assembly to either being blown out from the interior of the first container or to be sucked into said interior of said first container through the first air-opening. In this way, the air stream may pass through the first container along the food to be cooled, by taking away the warmth disposed by the food.

In an embodiment, the second container comprises a second air-opening to provide the air stream generated by the fan assembly, the second air-opening being arranged either for sucking ambient air to flow to the first container via the second opening or for outputting the air stream heated up by the food to be cooled. In this way, the air stream may pass through the second container, making the process of cooling down the food more efficient.

In an embodiment, a further first container comprises a bottom section, wherein the first air-opening is arranged in the bottom section, and wherein in the method
- the bottom section of the further first container is arranged on a top section of the first container or the second container; and
- the fan assembly of the second container is generating the air stream flowing through the interior of the further first container via said first air-opening.

In this way, a single fan assembly of a second container can cool down the food present in the first container and the further first container at the same time.

In an embodiment, the first container and the second container each comprise first supporting means at a top section, which first supporting means are adapted to support a bottom section of a further first and/or second container and wherein said further first and/or second container further comprise second supporting means at a bottom section respectively, which second supporting means are adapted to interlock with the first supporting means of the first container and the second container. In this way, a stable pile can be achieved, reducing the risk of collapse of the pile. It is preferred that the first container and the second container are stacking crates comprising first supporting means at the open top section and second supporting means at the bottom section, and the second supporting means are designed for cooperating with the first supporting means in such a way that the bottom section of one container can be interlocked on the top section of another container supporting the one container.

In an embodiment, a third container comprises first supporting means at the top section of the third container and second supporting means at the bottom section of said third container and in the method the third container supports a first container on top of said third container by interlocking the first supporting means with the second supporting means of said first container, and wherein a liquid from the first container is collected in said third container via the first air-opening. In this way, a liquid that may be drained out of the food being cooled down, is collected and stored in the third container, reducing the risk of contact and/or polluting the food being present in a further first container or a fan assembly of a second container placed below. The third container may comprise further air-openings to allow the air stream to flow through, the further air-openings for example locating at lateral sides of the third container.

In an embodiment, a plurality of first containers and a plurality of second containers and/or a plurality of third containers are used, said containers being stacked on top of each other forming a pile. In this way, the method provides flexibility since the number of first containers used in the method can be chosen depending on the amount of food to be cooled down, the method not being subjected to an inconvenience caused by a certain predetermined space needed for accommodating a device for storing the first containers to be cooled.

In an embodiment, the fan assembly comprises an air diffuser and the air stream generated by said fan assembly is distributed in the first container by the diffuser. In this way, the method allows for a more efficient cooling down process, since the air stream generated by the fan assembly is directed towards the food or distributed more evenly within the first container.

Further, the number and distribution of second containers comprising a fan assembly can be determined by parameters such as the number of containers required or the temperature of the food, allowing for a more energy-efficient method. It saves energy costs when one second container comprising a fan assembly can be used to cool down the food stored within more than one first container. This is for example achieved by a primarily first container being supported on top of a secondary first container, and the primarily first container comprising the air-opening at the bottom section, and one fan assembly locating in the second container is generating the air stream that circulates through the interior of the primary first container and the interior of the secondary first container to cool down the food of both first containers.

Said air stream is drawn into or out of the interior of said containers via an air-opening present in the pile. The air-opening may be openings provided in the walls such as the side walls of the containers, or gaps present in the pile between the containers mutually.

### BRIEF DESCRIPTION OF THE DRAWINGS

For the purpose of illustrating the invention, the drawings show aspects of one or more embodiments of said invention. However, it should be understood that the present invention is not limited to the precise arrangements and instrumentalities shown in the drawings, wherein:
Fig. 1A is a perspective view of a first container,
Fig. 1B is a perspective view of a second container,
Fig. 1C is a perspective view of a third container;
Fig. 2 is a pile obtained after stacking the first container, the second container and the third container depicted in Fig. 1A-1C.

### DETAILED DESCRIPTION OF THE DRAWINGS

It should be noted that items which have the same reference numbers in different figures, have the same structural features and the same functions. Where the function and/or structure of such item has been explained, there is no necessity for repeated explanation thereof in the detailed description.

It should be noted that the above-mentioned embodiments illustrate rather than limit the invention, and that those skilled in the art will be able to design many alternative embodiments.

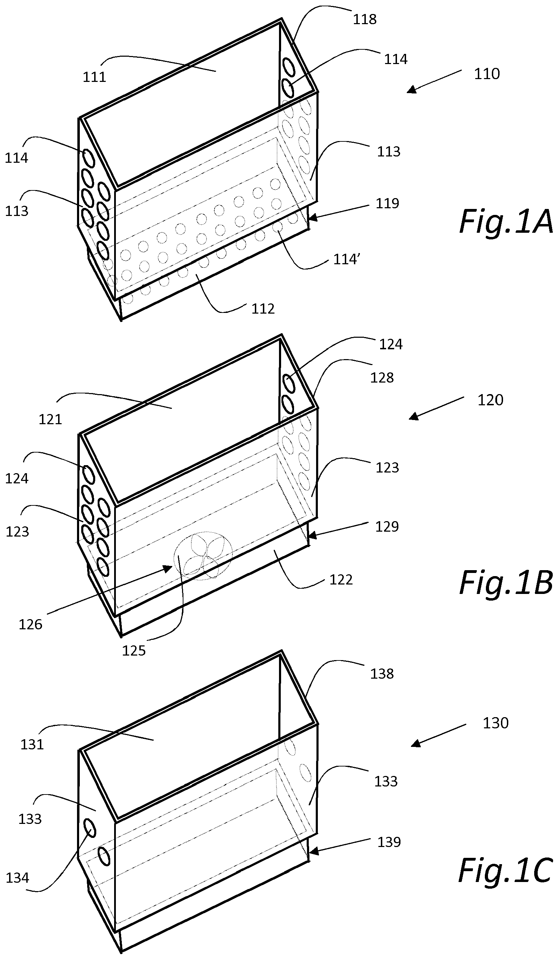

Figure 1A depicts a perspective view of an example of a first container 110, the first container 110 being a crate, the crate typically being a standard crate including gripping elements (not shown) to be engaged by a user carrying the crate by hands engaged with the gripping elements. The first container 110 comprises a first opening 111 at the top section, a bottom wall 112 and four lateral side walls 113. In this example, the lateral walls 113 and the bottom section 112 are perforated defining respectively a plurality of first air-openings 114. The first container 110 is preferably made of polypropylene.

Figure 1B depicts a perspective view of an example of a second container 120, the second container 120 at least having a similar size as said crate so as to stack on top of each other. The second container 120 comprises an opening 121 at the top section, a bottom wall 122 and four lateral side walls 123 and is preferably made of polypropylene. In this example, the bottom wall 122 comprises a second opening 125 wherein a fan assembly 126 is arranged. The fan assembly 126 may further comprise a diffusor (not shown). The lateral walls 123 comprise second air-openings 124.

Figure 1C depicts a perspective view of an example of a third container 130, the third container 130 at least having a similar size as said crate so as to stack on top of each other. The third container 130 comprises an opening 131 at the top section, a bottom wall 132 and four lateral side walls 133. The third container 130 is preferably made of polypropylene. In the present example, the lateral side walls 133 comprise openings 134 and the bottom wall 132 is closed to form a receptacle.

In the present example, the first container 110, the second container 120 and the third container 130 are stacking crates designed to be stacked on each other. This is achieved by the first container 110, the second container 120 and the third container respectively comprising first supporting means 118, 128, 138 and second supporting means 119, 129, 139. The first supporting means 118, 128, 138 are respectively defined by a rim of said opening 111, 121, 131. The second supporting means 119, 129, 139 are designed to interlock the open area defined by said rim. Thus, said crates can be stacked on top of each other in a secure way when forming a pile.

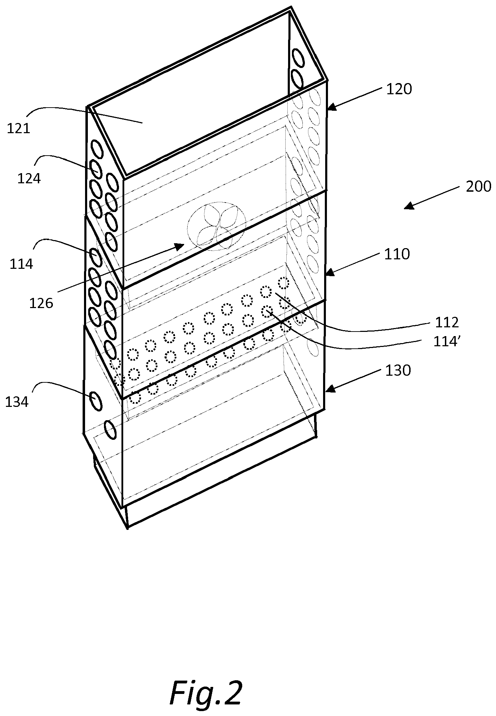

Figure 2 depicts a first container 110 stacked on top of a third container 130 and a second container 120 stacked on top of the first container 110, the first, second, and third container 110, 120, 130 forming a pile 200. The pile 200 is formed in a method for cooling down food (not shown) stored in the container 110. The stack is achieved by the cooperation of the first supporting means of the lower container with the second supporting means of the higher container as described herein before.

Food to be cooled may be stored within the first container 110, the food for example resting on a plate or other type of unit for containing food to be cooled. The fan assembly 126 of the second container 120 is connected to an electricity power supply (not shown) and said fan assembly 126 causes an air stream through the first container 110 via the second opening 125. Due to the underpressure generated, air enters inside the second container 120 through the second air-openings 124 and the second opening 121.

The air stream blown by the fan assembly 126 is distributed inside the first container 110 via the diffusor cooling down the food stored in said first container 110 and the air stream is blown out through the first air-openings 114. The liquid that may drain out the food will fall through the air-openings 114' arranged at the bottom wall 112 to be collected at the third container 130. Also, the process of collecting the liquid is favored by the openings 134 because air is being blowing air out through said openings 134.

The method is flexible since there is no need of special devices to hold and/or mount the pile 200, and said pile 200 can be mounted at any open space of a kitchen where the food has been cooked. Further, the number and distribution of the different crates may vary depending on the current circumstances.

Different embodiments to the examples provided above also falls within the scope of the claims. For example, the fan assembly can generate an air stream by sucking air from the interior of the first container, provided that air from outside is sucked into said first container through the first air-openings 114, and the air stream is generated.

Alternatively, the first container, the second container and the third container can be stacked in a different pattern. For example, there might be no third container at all within the plurality of containers forming the pile, or the third containers may comprise openings to allow the air stream to flow out and to facilitate the liquid to pass through the openings arranged at the bottom section of the first container.

Further, the plurality of containers forming the pile may comprise a plurality of first containers, a plurality of second containers and a plurality of third containers arranged in a different pattern. For example a second container can be stacked on top of two consecutive first containers or said two first containers are stacked on top of the second container.

## Claims

1. A method for cooling down food having a temperature higher than the ambient temperature, the method using:
• a first container (110) for storing the food to be cooled in an interior, the first container (110) comprising a first opening (111); and
• a second container (120) comprising a second opening (125) and a fan assembly (126) arranged to generate an air stream through the second opening (125);
and the method comprises the steps of:
- generating the air stream by operating the fan assembly (126); and
- stacking the first container (110) and the second container (120) to form a pile (200) in such a way that the first opening and the second opening (125) are arranged to allow the air stream to flow in the interior of the first container (110) along the food;
wherein the first container (110) comprises a first air-opening (114) to provide the air stream generated by the fan assembly (126) to either being blown out from the interior of the first container (110) or to be sucked into said interior of said first container (110) through the first air-opening (114).

2. The method according to claim 1, wherein the second container (120) comprises a second air-opening (124) to provide the air stream generated by the fan assembly (126), the second air-opening (124) being arranged either for sucking ambient air to flow to the first container (110) via the second opening (125) or for outputting the air stream heated up by the food to be cooled.

3. The method according to claims 1 or 2, wherein a further first container (110) comprises a bottom section, wherein the first air-opening (114) is arranged in the bottom section, and wherein in the method
- the bottom section of the further first container is arranged on a top section of the first container (110) or the second container (110); and
- the fan assembly (126) of the second container (120) is generating the air stream flowing through the interior of the further first container (110) via said first air-opening (114).

4. The method according to anyone of the previous claims, wherein the first container (110) and the second container (120) each comprise first supporting means (118, 128) at a top section, which first supporting means (118, 128) are adapted to support a bottom section of a further first and/or second container (110, 120) and wherein said further first and/or second container (110, 120) further comprise second supporting means (119, 129) at a bottom section respectively, which second supporting means (119, 129) are adapted to interlock with the first supporting means (118) of the first container (110) and the second container (120).

5. The method according to claim 4, if dependent from claim 3, wherein a third container (130) comprises first supporting means (138) at the top section of the third container (130) and second supporting means (139) at the bottom section of said third container (130) and in the method the third container (130) supports a first container (110) on top of said third container (130) by interlocking the first supporting means (138) with the second supporting means (118) of said first container (110), and wherein a liquid from the first container (110) is collected in said third container (130) via the first air-opening (114).

6. The method according to anyone of the previous claims, wherein a plurality of first containers (110) and a plurality of second containers (120) and/or a plurality of third containers (130) are used, said containers being stacked on top of each other forming the pile.

7. The method according to anyone of the previous claims, wherein the fan assembly (126) comprises an air diffuser and the air stream generated by said fan assembly (126) is distributed in the interior of the first container (110) by the diffuser.

8. The method according to anyone of the previous claims, wherein the first container (110) is a crate, and/or wherein the crate is having side walls, at least one of the side walls being pierced to define the air-opening (114).

9. The method according to anyone of the previous claims, wherein the second container (120) comprises a rectangular circumferential side frame having dimensions corresponding to the first container (110), preferably corresponding to the crate.
